(19) **Europäisches Patentamt / European Patent Office / Office européen des brevets**

(11) **EP 4 382 674 A1**

(12) **EUROPEAN PATENT APPLICATION**

(43) Date of publication:
**12.06.2024 Bulletin 2024/24**

(21) Application number: **23171424.7**

(22) Date of filing: **03.05.2023**

(51) International Patent Classification (IPC):
***E02D 3/12*** (2006.01)    ***C09K 17/02*** (2006.01)
***C09K 17/14*** (2006.01)

(52) Cooperative Patent Classification (CPC):
**E02D 3/12; C09K 17/02; C09K 17/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2022 IT 202200025245**

(71) Applicant: **Geosec International S.r.l.**
**43122 Parma (IT)**

(72) Inventors:
- **OCCHI, Andrea**
  **43122 Parma (IT)**
- **OCCHI, Marco**
  **43122 Parma (IT)**
- **GUALERZI, Daniele**
  **43122 Parma (IT)**

(74) Representative: **Locas, Davide et al**
**Cantaluppi & Partners S.r.l.**
**Piazzetta Cappellato Pedrocchi, 18**
**35122 Padova (IT)**

(54) **CONSOLIDATION AND STABILIZATION METHOD FOR COHESIVE, ARGILLACEOUS FOUNDATION GROUND AND/OR GENERALLY FOR A BUILDING SITE**

(57)    Consolidation and stabilization method for cohesive, argillaceous foundation ground or generally for a building site, comprising carrying out one or more injections of a solution of one or more salts in the ground and carrying out one or more injections of expanding resin in the ground.

EP 4 382 674 A1

**Description**

The present invention relates to a consolidation method for argillaceous foundation ground and/or generally for building sites which may potentially be subject to differential subsidence. In particular, the method according to the present invention is intended to be used both for the consolidation of the ground and for the chemical/physical stabilization thereof so as to limit the damage to constructions caused by the cyclical variation of the volume of the ground.

The climatic changes of recent decades are disturbing in a manner which is now compelling the stability of the surface ground with evident risks of damage to constructions which are and can be built. These effects are found to be even more evident for cohesive, argillaceous ground with a high potential for expansion and contraction.

The main factors which influence these phenomena depend on the nature and the characteristics of the ground, the depth and the position of the expansion volumes, the climatic characteristics, the level and type of underground water courses, the local sources of humidification and drying of the ground.

These clays, also called active clays, under conditions in situ are significantly subjected to thermal excursions by season at the surface and the more or less frequent meteorological precipitations which are more or less intense. The behaviour thereof with changes in temperature, in the presence of contact water, modifies the chemical/physical characteristics of the ground. In particular, cohesive, argillaceous ground in the absence of precipitation, even more so with high ground temperatures, reduce their initial volume; conversely, in the presence of frequent precipitations of water, similarly, in the presence of surface water, they increase their initial volume. These phenomena, referred to as contraction and expansion phenomena, respectively, once triggered, can cyclically produce effects which are also devastating for the foundation structures in contact which in turn will vertically transmit in a negative manner to the rigid structures the irregular tension stresses until the materials break.

Various attempts have been carried out in order to combat the negative effects which are caused by the cyclical variation phenomena of the volume in argillaceous ground.

A first solution involves transferring potassium and sodium cations to the structure of the expanding clays in order to limit the volumetric variation thereof over time.

However, other formulations have always been used in order to improve the stabilization of the argillaceous ground. Initially, by using mixtures of lime, then subsequently including mixtures of sodium chloride and gypsum, further using an emulsion of a polymer of vinyl acetate, and finally more recently also using one or more salts of potassium or ammonium together with lignin. An example of this technique is described in the international patent application WO 2020/153974 A1. However, the lignins are polymers which are poorly soluble in water (they generally take up a plastic form) and are readily degradable by the action of particular fungi and micro-organisms of the decomposition of wood.

Then, there exist other methods for stabilizing expanding clays which use electro-kinetic active ingredients, the first applications of which date from 1930 as a result of studies by Casagrande. In particular, electro-osmosis processes are defined. The processes are based on the constant rehydration of the ground with pairing during the introduction of an electric current into the ground to be stabilized. The potential difference which is generated by the electrical installation triggers an electro-osmotic flow which is capable of stabilizing the expanding ground. In order to be able to maintain the effects over time, however, the process involves the introduction of free water into the ground and the installation of a fixed installation with substantial installation and maintenance costs. However, alternatives to the osmotic processes are electro-migration and electrophoresis processes.

Electro-migration triggers the transport of the ions through the ground which is subjected to an electrical field with direct current as a result of a suitable electrode installation. The electrodes are fixed in the ground taking care to consider the significant volume under the foundation. The movement of the ions which are also introduced by means of adequate saline solution is carried out by electrostatic attraction which is brought about by the presence of the electrical field and by molecular diffusion. The ions can migrate in the same direction as the water flow or in the opposite direction thereto in the electrical field. More specifically, the ion species which are positively charged move through the medium which is passed through towards the cathode while the ion species which are negatively charged move through the porous medium towards the anode. The speed and the direction of migration depend on the charge thereof (positive or negative) and is naturally also influenced by the electro-osmotic flow. The whole of the flow of the ions reduces with the reduction of the concentration of the species present in accordance with the theories of molecular diffusion. The electro-migration is naturally linked with the availability of ions in solution and is therefore influenced by the mechanisms of adsorption/desorption which are caried out at the solid/liquid interface and which are, as is evident, influenced by the physical and chemical parameters both of the ground and of the solution (such as, for example, the pH, the capacity for ion exchange, etc.). During the electrokinetic process, a series of changes to the structure and the properties of the ground occur. Specific argillaceous minerals, such as, for example, montmorillonite, have important physical and chemical variations.

Therefore, it appears to be evident that still today there is a need to define a method which is possibly more effective but even more capable of maintaining over time the stabilizing effects of active clays.

Another limitation of the known techniques involves a specific difficulty in pursuing and obtaining the stabilizing effects which are as far as possible targeted, distributed and also confined suitably inside the significant volume of the foundation ground.

However, another important limitation relates to the optimization of the costs of injection and particularly of mineral solutions. In fact, it is known that the injections alone generally involve a dimensioning of concentrations of the salts which is often high, with a resultant effect of very high costs for the economy of the intervention, an aspect which is even more aggravated by the limitation of having to overcome the difficulty of allowing the greatest number of ion exchanges in the ground by assigning the entire process only to the action of gravitational force of the injection of the mixture and therefore to the quantity of mixture injected, the concentration of salt used, the methods and relevant expanded time-frames of migration of the ions. Not least, some techniques require continuous introductions of water into the ground in addition to stable permanent installations with an evident effect over time on the preservation and maintenance costs.

Therefore, the problem addressed by the present invention is to provide a consolidation and stabilization method for cohesive, argillaceous foundation ground or generally for a building site, which is structurally and functionally configured to at least partially overcome one or more of the disadvantages set out with reference to the cited prior art.

Another object of the present invention is to provide a consolidation and stabilization method for cohesive, argillaceous ground which can readily be adapted to the different types of argillaceous ground to be processed.

Another object of the present invention is to provide a consolidation and stabilization method for cohesive, argillaceous ground which can act effectively inside the significant volume of the foundation ground, that is to say, the volume intended to support the static loads of the construction.

Another object of the present invention is to provide a consolidation and stabilization method for cohesive, argillaceous ground which allows the stabilizing effects which are as far as possible targeted, distributed and also confined suitably within the significant volume of the foundation ground to be sought and obtained.

Another object of the present invention involves the possibility of confining the effects of the chemical/physical processing within the significant volume of the foundation ground to be stabilized.

Another object of the present invention is also to provide for the technique a consolidation and stabilization method for cohesive, argillaceous ground which improves the known solutions in the context of a simple and rational solution with operating costs and construction site times which are relatively low.

This problem is solved and one or more of these objects is/are at least partially achieved by the invention by means of a consolidation and stabilization method for cohesive, argillaceous ground, comprising carrying out one or more injections of a solution of one or more salts in the ground and carrying out one or more injections of expanding resin in the ground.

In fact, it will be appreciated that the injection into the ground of saline solutions in cohesive, argillaceous ground with a predisposition to contraction and plastic expansion allows a "paralysing" effect of the expanding clays to be obtained.

This "paralysing" effect is advantageously achieved by means of an ion exchange, that is to say, during the injection into the ground of salt solutions which contain substitution ions which are suitable for obtaining the substitution of individual mobile cations of the clays, which mobile cations are the main contributing agents to the expansion and contraction effects of the montmorillonite or other clays.

The action of the injections of expanding resin may instead be advantageously used for ground consolidation operations, allowing the water which is still present in the ground to be moved or in any case allowing preferential paths to be generated for the flow of water or voids which are present in the foundation volume to be filled.

The present invention may also have one or more of the following preferred features in addition to the features previously mentioned.

In preferred embodiments, the method comprises carrying out a temporary electrokinesis installation which is installed with electrodes which are positioned in the ground according to a predetermined pattern.

Preferably, the method further comprises applying a difference of potential between the electrodes which are inserted in the ground so as to generate a current flow between the electrodes. Advantageously, the difference of potential is removed after a predetermined time period, preferably before a potential subsequent injection of expanding resin.

In fact, the Applicant has observed that the method, in relation to the saline injection portion, can be accelerated and optimized by means of the electrode installation (anodes and cathodes) which are suitably fixed in the foundation ground and which are capable of facilitating the necessary ion exchange with ions of interest. The installation, which is advantageously temporary simply with the objective of processing or promoting the correct and rapid ion exchange, may provide for generally a direct current supplier, electrodes in numbers, types and positions in accordance with the installation geometry on the basis of the geological problem and capable of operating with low-potential electric currents (from 0.1 to 0.2 V/cm).

Preferably, the salt(s) comprise(s) one or more salts which is/are selected from the following: $NaCl$, $Na_2CO_3$, $CaCl$, $CaH(COO)_2$, $HCO_2Na$, $KCl$.

Preferably, the method comprises carrying out at least a first injection of a solution of salts which generates a precipitation of the salts in the ground, for example, a solution of $CaH(COO)_2$, and at least one subsequent injection of a solution of one or more salts which release(s) ions which are intended to participate in the ion exchange, the salt(s) being different with respect to the first injection, for example, a solution of $Na_2CO_2$.

Preferably, the first solution has a greater concentration than the solution used in the subsequent injection.

These successive injections advantageously allow a differentiation between the effects of the injections of salts because the Na+ ions, for example, will participate in the ion exchange by forming stronger bonds of interest, while the precipitation of the calcium carbonate, or another similar salt, will be carried out within more rapid times, bringing bonding effects to the particles of clay which will become constrained in their attempts to expand.

In conjunction with the saline injections, it is further possible to carry out (both before and after the saline injections in accordance with the different operating requirements and the different percentage selections) injections of expanding resin. Preferably, the expanding resin is a two-component polyurethane resin.

Preferably, the expanding resin is injected in different positions with respect to the solution of one or more salts.

In this manner, the resin and the solution of salts can act in an independent and optimized manner on the ground which is processed in accordance with the conditions and needs on site.

Preferably, the expanding resin is injected in the region of peripheral zones which are adjacent to a volume of ground in which the injection(s) of solutions of one or more salts is/are carried out.

In this manner, the expanding resin may have an effect of confining the action of the solution of salts, at the same time allowing limitation of the water flow in the region of the zone which is processed by means of the injection of salt solutions.

According to yet another aspect, there is defined in the ground a foundation volume on which there bears or is intended to bear a building which is arranged in the ground, the one or more injections of expanding resin being carried out in the region of the foundation volume.

These injections, which are advantageously carried out in conjunction with the injections in the region of the above-mentioned peripheral zones, allow the consolidation of the foundation ground to be carried out, potentially restoring the conditions necessary for load-bearing capacity and equilibrium of the construction.

Preferably, the injection(s) of expanding resin which is/are carried out in the region of the foundation volume is/are carried out after the injection(s) of solution of one or more salts.

In preferred embodiments, the method comprises defining volumes of clays in the region of the ground, preferably by means of preferably three-dimensional tomography of the electrical resistivity (ERT) of the ground to be consolidated.

Preferably, the tomography of the electrical resistivity (ERT) of the ground to be consolidated is carried out before the injections.

Preferably, the method comprises taking a sample of the ground during or immediately after the injection(s) of solutions of one or more salts.

As a result of these features, it is possible to support the injection of the solutions with suitable investigations in situ and then in the laboratory before, during and at the end of the "paralysing" processing operation, thereby allowing results which are targeted and controlled as far as possible to be obtained, and therefore being more effective over time.

The tomographical investigations can also allow information items relating to the results of the injections carried out to be obtained and may be carried out during all the steps of the method, that is to say, before, during and at the end of the injections.

Preferably, the method comprises measuring the electrical conductivity of the ground, allowing a preliminary characterization of the type of clay which characterizes the ground.

Additional preferred aspects are also defined in the appended claims and by the following description.

In the present description and in the claims which are appended thereto, and more generally in the context of the present invention, some terms and expressions are considered to take on, unless explicitly indicated otherwise, the meaning expressed in the following definitions.

In particular, the term "expanding resin" is intended to be understood to be a resin which includes an expanding agent. In preferred embodiments, this resin includes a two-component mixture, preferably of the closed-cell polyurethane type.

The term "solution of one or more salts" is intended to be understood to be one or more solutions based on water containing one or more mineral salts which preferably contain one or more of the following chemical elements: Na, K, Cl, Ca and carbonates.

The term "injection of resin" is intended to be understood to identify the introduction of expanding resin in a predetermined volume of the ground and at an established depth (which can also be at the surface). The duration of an injection or the time between the start of the introduction of resin in the ground and the interruption thereof, is variable and established in accordance with the ground and the quantity of resin which it is desirable to introduce in a single injection. It is also possible to consider a single injection at a single location or for a specific location of the ground there is carried out a single injection (and not a plurality of them at different times), the parameters of which can be modified in accordance with the reaction in situ in relation to the planned objectives.

However, the term "injections of a solution of salts" is intended to be understood to identify the introduction of one or more solutions of one or more salts in a predetermined volume of the ground and at an established depth (which can also be at the surface). The duration of an injection, or the time between the start of the introduction of the salts in the ground and the interruption thereof, is variable and established in accordance with the ground and the quantity of saline solutions which it is desirable to introduce. It is also possible to consider a single injection at a single location or for a specific location of the ground there is carried out a single injection (and not a plurality of them at different times), the parameters of which can be modified in accordance with the reaction in situ in relation to the planned objectives.

The features and advantages of the invention will be better appreciated from the detailed description of a number of the embodiments thereof which are illustrated by way of nonlimiting example.

In particular, there will be described below the application of the chemical/physical consolidation and stabilization method of the present invention in cohesive argillaceous ground with a predisposition to volumetric contraction and expansion.

The method comprises injecting into the ground solutions of salts which are capable of obtaining a "paralysing" effect for the expanding and integrated clays, preferably with injections of expanding resin.

Preferably, before these injections, there is carried out an analysis of the ground so as to select the solution(s) of salts based on the context in situ and the results of the laboratory analyses for the active argillaceous ground to be processed.

These investigations can also be used to measure the geological context but particularly the presence, the main properties and the distribution of the minerals of the clays, the percentage quantity thereof, the humidity of the ground, the sensitivity to contraction and expansion of the clays, tests, for example, of the type (in situ geo-electrical investigations ERT Electrical Resistivity Tomography, geotechnical tests in situ, such as pressiometric tests and cone penetration tests, laboratory tests for geotechnical characteristics, Atterberg limits, Vbs, permeability tests, withdrawal tests, etc.).

In particular, an electrical geophysical control before the processing operation will advantageously allow the 3D characterization of the argillaceous ground, particularly ground of the montmorillonite type, wherein the greater the content of montmorillonite, the greater will be the electrical conductivity (Lockhart 1981). Different factors may influence the results of the analyses of the electrical geophysical method and in particular the granulometric distribution, the porosity, the permeability, the plasticity, the mineralogy, the density, the cation exchange capacity (CEC) and the water content. It will be understood that the geophysical investigations may advantageously be integrated with the in situ and laboratory geotechnical tests for greater knowledge and a more precise characterization of the site.

The CEC is the sum of the positive charges of the cations which the ground is capable of adsorbing for a predetermined pH value, further represents a measurement for the total number of cations which can be exchanged and which the ground can retain and finally provides an estimate of the quantity of surface negative charges of this ground.

A study (Izzat et al., 2021) has demonstrated that resistivity values characterize and therefore distinguish the various argillaceous minerals which are most common. In particular, the CEC minerals, from the lowest to the highest, are: kaolinite, feldspar, quartz, mica, illite and montmorillonite. These values can be correlated between resistivity and cation exchange capacity (CEC), which shows that the greater is the ion exchange, the greater is the electrical conductivity of the sample (Table 1).

Table 1 - CEC, value of clay minerals

| Minerals | Cation Exchange Capacity CEC (meq/100g) |
|---|---|
| Kaolinite | 1-10 |
| Feldspar | 2 |
| Quartz | 4 |
| Mica | 30 |
| Illite | 10-40 |
| Montmorillonite | 80-120 |

The maximum cation exchange capacity is defined for all types of clays and is defined in milli-equivalents per 100 grammes of dry clay at 100°C (meq/100g).

It is generally evident that the ERT support is advantageously capable of recognizing in a 3D manner the presence in the ground of the argillaceous minerals, including the ones which are most sensitive to the volumetric variations.

In particular, it may be the method for geophysical surveying which is referred to as induced polarization IP (Schlumberger 1913) which uses the capacitive properties of a number of geological materials which acts as capacitors, or which become charged during the introduction of an electrical current into the ground and become discharged when it is interrupted.

Furthermore, additional laboratory tests which are suitably selected for calibrating the geophysical investigations in situ will be recommended. In particular, diffractometric analysis using X-rays which is fundamental to the chemical/physical characterization of the clays, as well as geotechnical tests for determining the main mechanical properties thereof, as set out above.

By means of suitable characterization of the clay, it is therefore possible to take into consideration one of the parameters of interest for the method according to the present invention, that is to say, the capacity of the clay, which is more or less pronounced, for absorbing water by virtue of an attraction between the water itself and a number of minerals present in the clay, which capacity leads to a variation in the composition thereof and in the chemical/physical characteristics thereof.

The water in the ground can be bonded to the clays externally with respect to the particles, but also between the mineral layers which compose it. The most common minerals which constitute the clays are kaolinite, chlorite, illite and montmorillonite of the most common group of smectites.

In particular, the crystalline structure of these argillaceous minerals is defined as being extensible, wherein in montmorillonites the expansion is at a maximum in the normal direction to the plane of the particles.

In particular, the argillaceous minerals have a surface negative charge and water which is a dipole is adsorbed by this charged surface. The presence of cations brings about the neutralization of the surface charge and therefore the flocculation of the clay. The different argillaceous minerals have surface negative charges with an intensity which is relatively very different, as a result of which they also have a different capacity for adsorbing water and therefore for expanding the volume thereof.

In order to define this capacity, there has been introduced (Skempton, 1953) an index of activity A defined as:

$$A = Ip / CF$$

where IP indicates the plasticity index of argillaceous ground, CF is the percentage content of the argillaceous minerals. The plasticity index Ip can therefore be expressed as:

$$Ip = A \times CF$$

where A is the constant which depends on the characteristics of the argillaceous minerals.

Therefore, from this relationship it can be derived that the plasticity of cohesive ground is substantially controlled by the percentage and the composition of the argillaceous minerals. Non-expanding argillaceous minerals, such as kaolinite and illite, have lower Ip values while the expanding ones with a high adsorption capacity for water, such as montmorillonite, have high Ip values. Furthermore, the montmorillonites have a wide range of variability of A which depends on the availability of cations in order to neutralize the great deficiency of charge which characterizes montmorillonite.

Calcium (Ca++) and sodium (Na+) are the most common free cations of the interstitial water. The interstitial water, which is rich in calcium, as a result of the higher valency of the Ca++ ion, has a greater capacity for neutralization than water which is rich in Na+, wherein the neutralization of the surface negative charge of the argillaceous minerals reduces the quantity of water adsorbed necessary for completing the neutralization of the surface negative charge.

It can be derived that montmorillonites which are rich in calcium generally have a lower Ip than montmorillonites which are rich in sodium, and therefore for the same percentage content of argillaceous minerals they will constitute pieces of ground with a lower activity index (A). Conversely, the montmorillonites which are poor in calcium will have a greater activity index and are such as to call for an intervention, with greater concern, which is aimed at mitigating the effects of expansion of the volume thereof. In fact, the energy with which the water is retained by an argillaceous mineral influences the capacity thereof for changing volume. In particular, the classification of the argillaceous ground on the basis of the activity index is as follows (Skempton, 1953):

| Inactive | A<0.75 |
| --- | --- |
| Normally active | 0.75<A<1.25 |
| Active | A>1.25 |

In addition to the evaluation of the nature and the characteristics of the argillaceous foundation ground, it is further advantageous to consider the influence of the charge which is or can be applied to argillaceous foundation ground on the development over time and the final value of the expansion expected. Advantageously, there may also be provision for considering the influence of the interpolation between the foundation and expanding ground of layers of inert material, but also the conditions for cancelling the expansion with the depth as a result of the effect of the combined action of the lithostatic load, the overloading and the shearing resistance of the ground, finally the different effect of the cycles of soaking/drying out on the expansion and the contraction of the argillaceous ground for the final object of constructing buildings with adequate provisions in terms of stability and safety.

The preliminary characterization of the ground and the site to be processed therefore allows an evaluation of the type of intervention to be carried out, with particular reference to the type of salt or salts to be used in the injections, and the characteristics of the injections themselves.

In fact, it will be appreciated that the injections of salts allow substitution ions which will replace the mobile cations of the clays which are responsible for the expansion effects of the montmorillonites to be injected into the ground.

Substitution ions which are external with respect to the montmorillonite are therefore injected into the argillaceous ground by means of water at an initial concentration adequate for promoting the replacement of mobile cations of clay with ions of Na+ or Ca++ in accordance with the injected solution. The external substitution ions (Na+ or Ca++) interact with the structure of the crystals of montmorillonite. The ion exchange obtained generates (over time) new bonds between the silicates of the clay which will be more powerful downstream of the processing operation. Once the ion exchange has taken place, the substituted cations will be able to remain inside the volume of clay processed without any significant reversible effects as a result of the bond of interest which is produced between the type of ion introduced, the adequate concentration of substitution ions and the clay which is processed and in turn in contact with the interstitial water.

The result obtained will be a function of:

- selection of the most suitable substitution ions;
- adequate concentration of the substitution ions, influenced by the quantity of montmorillonite in the ground and the humidity of the ground;
- use, type and configuration of the electromigration installation for facilitating the CEC;
- the adequate contact time for the ion exchange;
- additional chemical/physical actions of absorption of the contact water.

The effects resulting from the "paralysing" processing may be generally maintained because the (electrostatic) bonds obtained will be more powerful than the preceding bonds but with ions which are still mobile (less mobile than the ions originally present), therefore also under ground conditions which are extremely saturated these substitution ions, if they had to move (remaining on the silicate) will not affect the stability over time of the processing operation because they do not interact significantly with the water which circulates in the ground afterwards.

Furthermore, under dry ground conditions (drought), the water molecules will tend to become detached from the ion which is injected, but the relationship which this ion will have with the water will be such as not to negatively affect the structure of the clay and therefore the contraction thereof. Whereas it is specified that in this context the expanding resin injections may also bring their contribution as a result of the action of mechanical confinement around the saline injections.

During this approach, it is also necessary to consider defining beforehand the percentage of montmorillonite in the ground so that mobile ion exchanges of the clay with substitution ions which are injected are optimum in relation to the water.

In some embodiments, there may be provision for defining, as a result of specific tests, the lowest concentration of the salt which could ensure the maximum result in accordance with the percentage of montmorillonite in the ground to be processed. However, there may also be provision, in a manner compatible with the economy of the intervention, for carrying out injections of minerals at higher concentrations which may allow an additional capacity for free substitution ions for additional chemical/physical actions over time to be made available in the ground. This approach for ion exchange provides for an equilibrium time which is not immediate and it will therefore be advantageous to consider a facilitation process of the electrokinetic type in addition to periodic checks on the main reference parameters of the ground.

As mentioned previously, in accordance with the conditions measured and the prevalent type of argillaceous mineral, there are provided injections, which are targeted towards the ground in accordance with specific times, of mineral solutions which are adequate for reducing the sensitivity to expansion of the expanding clays.

According to one exemplifying embodiment, there may be provision for injecting into the ground a solution of NaCl (solubility in water 358 g/l - 293°K) with the objective of using the Na+ ion at an adequate concentration for obtaining the bond of interest. Even more preferred for ground which is intended for the foundations of buildings may be an injection of solutions of sodium formate $HCO_2Na$ (solubility 820 g/l - 20°C) which as known is non-corrosive for the reinforcements of underground structures.

However, it will be appreciated that the monovalent Na+ ion is able to construct bonds of interest which are less powerful than the bivalent Ca++ ion, therefore providing for an injection of a CaCl solution and even more preferably in the variant thereof involving calcium formate $CaH(COO)_2$ which is also non-corrosive for the reinforcements of the foundations.

Naturally, however, the last two solutions which are more advantageous from the point of view of the construction of a more robust bond of interest are less soluble in water and therefore will have to be metered in accordance with adequate concentrations. However, the use of an electrokinesis installation for catalysing and optimizing the migration and subsequent ion exchange is of significant importance for optimizing the process.

The injections will be carried out by means of inserting into the ground tubes after constructing holes with an adequate diameter. The holes may be constructed in a manner which is highly targeted in accordance with the results of the investigations and the tests in situ and in the laboratory. The number of injections, levels, spacing, quantity and concentrations of the solutions will be established in accordance with the objectives sought and the findings verified both in an ongoing manner and after the end of the stabilizing injections. Above ground, at the end of the injection tubes, there can be connected injection tubes for the mixtures which in turn lead from the injection installation which is gravity-fed but also under pressure. Inside the installation, there may be considered the tanks necessary for preparing the mixtures of minerals at adequate concentrations for the intended processing operation. The mineral mixtures can be injected by means of water which is also under pressure by introducing the solutions into the ground. The injections can be carried out individually but also simultaneously, in a vertical manner but also in an inclined manner, at one or more depth levels in the ground, including one above the other.

In an alternative embodiment, there may be provision for sequentially injecting, by means of water, two mineral solutions, initially according to a first example calcium formate (preferably at a higher concentration than the subsequent one) which will make available in the argillaceous ground Ca++ ions and subsequently a solution of $Na_2CO_3$ which will detach Na+ ions and $CO_3$-- ions. As usual, the substitution ions will participate in the ion exchange by forming more powerful bonds of interest while the precipitation of the calcium carbonate will be carried out in more rapid times, bringing bonding effects to the particles of clay which will become constrained in terms of their attempts to expand.

However, this time for constructing bonds of interest by means of ion exchange is greater than the useful time for obtaining calcium carbonate $CaCO_3$ in the form of precipitation directly in the ground being processed. This mineral, which is also known as an optimum hydraulic binder and which is poorly soluble in water, would normally be difficult to inject into the ground but with this approach it will instead advantageously be possible to obtain it directly in the ground to be processed so as to produce binding effects directly between particles in the presence of water and therefore effects of physically containing the active clays. The substitution ions then further reinforce the effect of mitigating the expansion of the clays by also adding the useful contribution thereof, always resulting from the ion exchange which has already been described and wherein at greater concentrations the solution may ensure additional bonds of interest in the ground for subsequent ion exchanges with particles of clay which have not yet been processed by the first injections.

Furthermore, this processing with precipitation of the calcium carbonate will additionally be difficult to reverse from the chemical point of view except under surrounding conditions which in the ground are not at all ordinary (very high temperatures, presence of aggressive acids from polluted sites).

It may also be noted that the calcium carbonate is very poorly soluble (0.014 g/l) and therefore (with an exception being made for extreme conditions, such as, for example, floods and overflow incidents, with substantial accumulations of water persisting over time) under normal conditions of interstitial water circulation (rainwater or groundwater), the effect thereof on the clays will not generally be reduced, preserving the benefit thereof over time.

In a second example of the present invention, however, the saline injections can be carried out with solutions of KCl which will make monovalent K+ ions available in the argillaceous ground. As usual, the substitution ions will participate in the ion exchange by forming more powerful bonds of interest.

In particular, it has been found that test processing operations carried out in this manner on a number of argillaceous pieces of ground which are particularly active and plastic have reduced the plasticity index Ip to 65% and a reduction of the Vbs (methylene blue) to 40%.

For better results in terms of time, costs and effects, it is preferable also to consider a temporary electrokinesis installation which is installed with electrodes (anodes and cathodes) which are positioned in accordance with patterns which are studied for this purpose in accordance with the specific geological problem. The installation advantageously promotes the migration of the ions in accordance with more rapid times and established quantities of bonds. The installation may be removed at the end of the processing operation and additional saline injections are not necessary.

Advantageously, at the end of the injections of salt solutions, the investigations in situ and in the laboratory can be repeated in order to verify the results obtained in accordance with adequate times for the different "paralysing" solutions.

The method according to the present invention further provides for the injection of expanding resins into the ground.

In order to be able to maintain the effects obtained, there may be carried out, equally well before or after the "paralysing" processing operation in accordance with the requirements of the construction site, injections of expanding resins which are preferably of the two-component polyurethane type with closed cells.

One type of resin which is suitable for use with the method according to the present invention is, for example, described in the patent EP1914350.

The use of these resins may have two different functions:

a) better confinement of the substitution ions inside the significant volume by preventing circulations outwards and protecting the processed volume;

b) consolidating the foundation ground by restoring the conditions necessary for load-bearing capacity and equilibrium of the construction.

In the first case, the injections can be carried out both around and under the foundations but also advantageously to confine inside the volume of ground processed by the preceding injections the paralysing effects sought.

The objective can be obtained as a result of the expanding action of the injected resins which are advantageously capable of compacting the volume of ground processed so that the permeability thereof can also become lower and can therefore obstruct the subsequent migration of free ions which are where applicable injected where necessary in excess in the significant volume in order to promote additional CEC with clay particles which are still available. Tests and investigations which are previously described in support of the injections before, during and at the end will also be advantageous for this last purpose.

In fact, it will be appreciated that typically the injections of salt solutions are carried out in accordance with a mesh which is configured for the purpose. However, the total ion exchange is not ensured between the ions injected and clays. As a result, a specific quantity of ions may presumably remain free in the ground.

As a result of the targeted injections of expanding resins, it will be possible to allow the ions injected by means of the suitable injections of salt solutions to remain available for the foundation ground in the significant volume so that, in the event of new water (rainwater, groundwater, etc.), they can return in a circle in order to search for a bond of interest with the particles of clay which may be available.

However, the second objective is preferably achieved by carrying out injections of resin inside the significant volume in order to obtain the necessary load-bearing capacity for the ground.

The injections of expanding resins may be carried out in the ground by means of a dedicated installation after constructing adequate injection holes in terms of numbers, quantities, types of resin and geometry and levels of injection so as to obtain the desired confinement.

Again, at the end of the injections, or during them, there can be carried out additional monitoring of the ground, preferably by means of tomography of the electrical resistivity of the ground.

**Claims**

1. A consolidation and stabilization method for cohesive, argillaceous foundation ground or generally for a building site, comprising:

a. carrying out one or more injections of a solution of one or more salts in the ground; and

b. carrying out one or more injections of expanding resin in the ground.

2. A consolidation method according to the preceding claim, wherein the salt(s) comprise(s) salts of one or more of the following elements: Na, K, Cl, Ca and carbonates.

3. A consolidation method according to the preceding claim, wherein the salt(s) comprise(s) one or more salts which are selected from the following: NaCl, $Na_2CO_3$, CaCl, $CaH(COO)_2$, $HCO_2Na$, KCl.

4. A consolidation method according to the preceding claim, comprising carrying out at least a first injection of a solution of one or more salts which generates a precipitation of the salt(s) in the ground, and a subsequent injection of a solution of one or more salts which release(s) ions which are intended to participate in the ion exchange, the salt(s) being different with respect to the first injection.

5. A consolidation method according to any one of the preceding claims, comprising carrying out a temporary electrokinesis installation which is installed with electrodes which are positioned in the ground according to a predetermined pattern.

6. A consolidation method according to the preceding claim, further comprising applying a difference of potential between the electrodes which are inserted in the ground so as to generate a current flow between the electrodes.

**7.** A consolidation method according to the preceding claim, wherein the difference of potential is removed after a predetermined time period, preferably before a potential subsequent injection of expanding resin.

**8.** A consolidation method according to any one of the preceding claims, wherein the expanding resin is a two-component polyurethane resin.

**9.** A consolidation method according to any one of the preceding claims, wherein the expanding resin is injected in different positions with respect to the solution of one or more salts.

**10.** A consolidation method according to the preceding claim, wherein the expanding resin is injected in the region of peripheral zones which are adjacent to a volume of ground in which the injection(s) of solutions of one or more salts is/are carried out.

**11.** A consolidation method according to any one of the preceding claims, wherein there is defined in the ground a foundation volume on which there bears or is intended to bear a building which is arranged in the ground, the one or more injections of expanding resin being carried out in the region of the foundation volume, the injection(s) of expanding resin which is/are carried out in the region of the foundation volume preferably being carried out after the injection(s) of solution of one or more salts.

**12.** A consolidation method according to any one of the preceding claims, comprising defining volumes of clays in the region of the ground, preferably by means of three-dimensional tomography of the electrical resistivity of the ground to be consolidated.

**13.** A consolidation method according to the preceding claim, wherein the three-dimensional tomography of the electrical resistivity of the ground to be consolidated is carried out before the injections of solution of one or more salts so as to carry out a preliminary analysis of the ground.

**14.** A consolidation method according to the preceding claim, wherein the preliminary analysis of the ground comprises taking a sample of the ground before the injections.

**15.** A consolidation method according to any one of the preceding claims, comprising taking a sample of the ground during or immediately after the injection(s) of solutions of one or more salts and/or measuring the electrical conductivity of the ground.

Europäisches
Patentamt

European
Patent Office

Office européen
des brevets

# EUROPEAN SEARCH REPORT

Application Number

EP 23 17 1424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 543 769 A1 (GEOSEC S R L [IT]) 9 January 2013 (2013-01-09) * paragraph [0019] – paragraph [0056]; figure 4 * | 1-15 | INV. E02D3/12 C09K17/02 C09K17/14 |
| A,D | WO 2020/153974 A1 (HAYWARD BAKER INC [US]; KELLER HOLDING GMBH [DE]) 30 July 2020 (2020-07-30) * page 5, line 18 – page 20, line 11 * | 1-15 | |
| A | EP 1 914 350 A1 (GEOSEC S R L [IT]) 23 April 2008 (2008-04-23) * paragraph [0021] – paragraph [0028]; figures 1,2 * | 1-15 | |

TECHNICAL FIELDS SEARCHED (IPC)

E02D
F16D
C09K

The present search report has been drawn up for all claims

| Place of search | Date of completion of the search | Examiner |
|---|---|---|
| Munich | 6 October 2023 | Geiger, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

## ANNEX TO THE EUROPEAN SEARCH REPORT
## ON EUROPEAN PATENT APPLICATION NO.

EP 23 17 1424

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | | Publication date |
|---|---|---|---|---|---|
| EP 2543769 | A1 | 09-01-2013 | BR | 102012016766 A2 | 22-04-2014 |
| | | | CL | 2012001806 A1 | 22-03-2013 |
| | | | EP | 2543769 A1 | 09-01-2013 |
| | | | US | 2013011206 A1 | 10-01-2013 |
| WO 2020153974 | A1 | 30-07-2020 | EP | 3914666 A1 | 01-12-2021 |
| | | | US | 2022154072 A1 | 19-05-2022 |
| | | | WO | 2020153974 A1 | 30-07-2020 |
| EP 1914350 | A1 | 23-04-2008 | AT | E539200 T2 | 15-01-2012 |
| | | | EP | 1914350 A1 | 23-04-2008 |
| | | | ES | 2380045 T3 | 08-05-2012 |

EPO FORM P0459

For more details about this annex : see Official Journal of the European Patent Office, No. 12/82

**EP 4 382 674 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020153974 A1
- EP 1914350 A